# EUROPÄISCHE PATENTSCHRIFT

(11) **EP 2 650 161 B1**
(45) Veröffentlichungstag und Bekanntmachung des Hinweises auf die Patenterteilung: **01.02.2017**
(21) Anmeldenummer: 13163040.2
(22) Anmeldetag: 10.04.2013
(51) Int. Cl.: B60K 26/02, B62D 1/22, G09B 9/04, G05G 1/04

(54) **Baumaschine oder Nutzfahrzeug mit als Multifunktionsstellteilen für wesentliche Fahr- und Arbeitsfunktionen**
Construction machine or commercial vehicle with multifunction operating elements for essential drive or working functions
Engin ou véhicule utilitaire avec actionneurs multifonction pour des fonctions essentielles de conduite et de travail

(30) Priorität: 10.04.2012 DE 102012103070
(43) Veröffentlichungstag der Anmeldung: 16.10.2013
(73) Patentinhaber: Braun, Bernd, 50859 Köln (DE)
(72) Erfinder: Braun, Bernd, 50859 Köln (DE)
(74) Vertreter: Fritz, Edmund Lothar

(56) Entgegenhaltungen:
- EP-A1- 1 980 441
- WO-A1-2010/039065
- DE-A1- 10 207 912
- DE-A1-102008 014 879
- DE-C1- 19 548 717
- DE-U1-202007 003 703
- FR-A- 558 338
- US-A- 5 226 497

## Beschreibung

Die vorliegende Erfindung betrifft eine Baumaschine oder ein Nutzfahrzeug mit mindestens einer Fahrzeugkabine oder mindestens einem Führerhaus mit einem ersten Sitz mit ersten Bedieneinrichtungen für eine erste Bedienungsperson, von dem aus alle wesentlichen Fahr- und/oder Arbeitsfunktionen der Baumaschine oder des Nutzfahrzeugs bedienbar sind, wobei in der Fahrzeugkabine/dem Führerhaus wenigstens ein zweiter Sitz mit zweiten Bedieneinrichtungen für eine zweite Bedienungsperson vorgesehen ist, von dem aus ebenfalls alle wesentlichen Fahr- und/oder Arbeitsfunktionen der Baumaschine oder des Nutzfahrzeugs bedienbar sind, einschließlich einer Lenkfunktion für das Fahrzeug, wobei Steuerelemente vorgesehen sind, mittels derer bei gleichzeitiger Betätigung der ersten und der zweiten Bedieneinrichtungen den zweiten Bedieneinrichtungen ein höherer Rang zugewiesen wird, so dass die zweiten Bedieneinrichtungen die ersten Bedieneinrichtungen übersteuern und wobei die ersten Bedieneinrichtungen und die zweiten Bedieneinrichtungen jeweils wenigstens ein von Hand bedienbares Multifunktionsstellteil umfassen.

Aus dem Stand der Technik bekannt sind so genannte Fahrschulfahrzeuge, bei denen Bedieneinrichtungen für eine zweite Person, insbesondere einen Fahrlehrer vorgesehen sind, welcher in der Regel auf einem Sitz neben dem zu schulenden Fahrer Platz nimmt und über seine Bedieneinrichtungen in das Geschehen eingreifen kann, wenn dies notwendig wird, wobei die zweiten Bedieneinrichtungen höherrangig gegenüber den ersten Bedieneinrichtungen des Fahrers sind, so dass bei Eingreifen des Fahrlehrers die vom Fahrer ausgeübte Funktion übersteuert wird. Allerdings sind bei solchen Schulungsfahrzeugen meist nur eingeschränkte Funktionen für die zweite Person vorgesehen, in der Regel sind dies Gaspedal, Bremse oder Kupplung. Der Fahrlehrer kann jedoch keine Lenkfunktion ausüben. Bei Baumaschinen erfolgt jedoch eine Schulung nach dem bisherigen Stand der Technik entweder über eine zweite Person im Führerhaus, die jedoch nicht direkt in das Geschehen eingreifen kann, sondern nur Anweisungen gibt, oder die zweite Person befindet sich sogar außerhalb des Führerhaus, da in diesem nicht genügend Platz für die zweite Person ist.

Die DE 20 2007 003 703 U1 beschreibt ein militärisches Fahrschulfahrzeug in Form eines Fahrschulpanzers mit einem Fahrerplatz und einem Fahrlehrerplatz, wobei letzterem eine zweite Lenkvorrichtung zugeordnet ist, die über einen Seilzug und eine magnetische Rückstellfeder mit einer ersten Lenkvorrichtung gekoppelt ist und diese so übersteuern kann. Weiterhin hat der Fahrlehrerplatz ein zweites Bremspedal, welches über ein Betätigungsventil auf einen Hydraulikkreis einwirkt und über mechanische Verbindungselemente kann auf das erste Bremspedal des Fahrerplatzes eingewirkt und dieses vom Fahrlehrerplatz aus übersteuert werden. Bei diesem bekannten Fahrzeug handelt es sich jedoch nicht um ein Arbeitsfahrzeug, bei dem beispielsweise ein Schaufelarm oder Ausleger bedient werden muss. Die genannte Druckschrift bietet daher keine Lösung für eine Übersteuerung von Bedienelementen für die Betätigung eines Schaufelarms oder Auslegers, wozu in der Regel so genannte joysticks verwendet werden.

Die DE 10 2006 032 781 A1 betrifft eine Anordnung zur Ansteuerung einer ur Führung eines Fahrzeugs vorgesehenen Aktuatoreinheit mittels einer fahrerseitigen Bedieneinheit und einer beifahrerseitigen Bedieneinheit, bei der Stellsignale erzeugt werden, die an eine Steuereinheit übertragen werden. Die fahrerseitige und beifahrerseitige Bedieneinheit kann hier ein Lenkradmodul, eine Bremspedaleinheit, Gaspedaleinheit oder Kupplungspedaleinheit sein. Diese bekannte Anordnung ist somit nur für die genannten Bedienelemente von Kraftfahrzeugen vorgesehen und kommt in Fahrschulfahrzeugen in Form von Personenkraftwagen zum Einsatz. Auch in dieser Schrift finden sich keine Anregungen für Lösungen, wie man Baumaschinen mit zwei Fahrerplätzen ausrüstet, von denen aus jeweils alle Bedienfunktionen der Baumaschine ausführbar sind.

Die Spanische Patentschrift ES 2 147 117 A1 beschreibt Lastkraftwagen mit zwei nebeneinander liegenden Fahrerplätzen, die beide jeweils über ein eigenes Lenkrad und eigene Gas-, Brems-, und Kupplungspedale verfügen. Von beiden Fahrerplätzen aus lassen sich über mechanische Kopplungselemente Lenk-, Beschleunigungs-, und Bremseinrichtungen des Fahrzeugs betätigen. Lediglich der Schaltknüppel sowie Anzeigeinstrumente sind im Bereich einer zwischen den beiden Fahrerplätzen liegenden Mittelkonsole angeordnet. Auch bei diesem Fahrzeug handelt es sich um ein herkömmliches Fahrschulfahrzeug im Lastkraftwagenbereich. Eine Bedienung von Arbeitsfunktionen des Fahrzeugs über joysticks ist nicht vorgesehen.

Die DE 201 17 325 U1 beschreibt eine Steuervorrichtung zur Verwendung in einem Fahrschulfahrzeug, das von einem Fahrschüler gefahren wird, wobei die Steuervorrichtung Funktionen oder Einrichtungen des Fahrschulfahrzeugs steuert. Dabei weist ein Fahrlehrerstand, der sich in einem zweiten Fahrzeug befinden kann, ein Funkmodul auf, so dass das Fahrschulfahrzeug über Sender und Empfänger ferngesteuert werden kann. Es können Funktionen des Fahrschulfahrzeugs wie Bremspedal, Gaspedal, Kupplungspedal, Blinker per Funk ferngesteuert werden. Auch hier handelt es sich bei dem Fahrschulfahrzeug um ein Kraftfahrzeug für den Straßenverkehr, insbesondere um einen Bus.

Aus der DE 195 48 717 C1 ist der Oberbegriff des Anspruchs 1 bekannt.

Bei Erdbaumaschinen werden im allgemeinen von Hand bewegbare Multifunktionsstellteile als Bedienelemente (so genannte joysticks) verwendet, wobei in der Regel zwei solcher joysticks vorhanden sind, die mit der rechten bzw. linken Hand bedient werden und mittels derer alle Grundfunktionen des Fahrzeugs bedient werden, insbesondere Vortrieb, Rücktrieb, Drehung des Fahrzeugs um eine stehende Kette, Drehung des Oberwagens, Aus- und Einfahren des Stielzylinders, Senken und Anheben des Auslegers, Ankippen und Auskippen des Löffels etc. Dabei kann es Funktionen geben, die mit nur einem joystick betätigt und solche die durch gleichzeitige Betätigung beider joysticks bedient werden. Multifunktionsstellteile (joysticks) dieser Art lassen sich von einer aufrechten Position ausgehend sowohl nach vorn oder hinten kippen als auch zu beiden Seiten hin kippen, so dass durch Bedienung eines joysticks allein mindestens vier verschiedene Funktionen bedient werden können.

Die vorliegende Erfindung beruht auf der Erkenntnis, dass auf einer Baumaschine oder einem Nutzfahrzeug nicht geschulte Personen, beispielsweise Kinder oder behinderte Personen oder auch interessierte Erwachsene gern einmal eine solche Maschine bedienen möchten. Dies ist auf den bekannten Maschinen nicht möglich. Soweit die Erfindung sich auf Nutzfahrzeuge bezieht, sind damit Fahrzeuge mit Arbeitsfunktionen gemeint, das heißt, Fahrzeuge, die anders als Personenkraftwagen oder Lastkraftwagen nicht primär für den Straßenverkehr vorgesehen sind. Dies schließt jedoch nicht aus, dass ein solches Nutzfahrzeug gelegentlich auch über eine Straßenzulassung verfügt, um mit diesem von einem zum anderen Einsatzort zu fahren.

Die Aufgabe der Erfindung besteht daher darin, eine Baumaschine zu schaffen, die ein Bedienen möglichst aller Funktionen durch eine erste Person ermöglicht, wobei aber eine zweite geschulte Person bei Bedarf aus Sicherheitsgründen jederzeit in das Geschehen eingreifen kann.

Die Lösung dieser Aufgabe liefert eine erfindungsgemäße Baumaschine mit den Merkmalen des Anspruchs 1.

Erfindungsgemäß ist vorgesehen, dass die Fahrzeugkabine oder das Führerhaus gegenüber einem Normfahrzeug verlängert, verbreitert oder höher ausgebildet ist und dass über Gewichte der Schwerpunkt des Fahrzeugs/der Baumaschine so austariert ist, dass dieser bei verlängerter oder verbreiterter Fahrzeugkabine oder verlängertem oder verbreitertem Führerhaus etwa mittig im Bereich einer zentralen Drehachse der Fahrzeugkabine/des Führerhauses liegt oder der Schwerpunkt anderweitig entsprechend der Arbeitsweise der Baumaschine/des Nutzfahrzeugs optimiert ist.

Die ersten Bedieneinrichtungen und die zweiten Bedieneinrichtungen umfassen jeweils wenigstens ein von Hand bedienbares Multifunktionsstellteil. Unter Multifunktionsstellteil in diesem Sinne wird ein joystick verstanden, der sich in der Regel nach vorn oder hinten sowie zu beiden Seiten hin kippen lässt und dabei verschiedene Arbeits- oder auch Fahrfunktionen der Maschine auslöst.

Vorzugsweise umfassen die ersten Bedieneinrichtungen und die zweiten Bedieneinrichtungen jeweils wenigstens zwei von Hand bedienbare Multifunktionsstellteile der vorgenannten Art, die beispielsweise mit der rechten und mit der linken Hand bedient werden können und entsprechend rechts und links vom Fahrer angeordnet sind, so dass durch Kippen dieser Bedieneinrichtungen in jeweils vier verschiedene Richtungen bis zu acht verschiedene Bedienfunktionen der Maschine ausgeübt werden können.

Bevorzugt kann weiterhin vorgesehen sein, dass mindestens eine weitere Bedienfunktion der Baumaschine oder des Nutzfahrzeugs ausgeübt wird durch gleichzeitiges Betätigen zweier Multifunktionsstellteile der ersten Bedieneinrichtungen oder der zweiten Bedieneinrichtungen, beispielsweise gleichzeitiges Drücken und Kippen beider Multifunktionsstellteile nach vorn oder hinten. Für die Multifunktionsstellteile kann beispielsweise eine Belegung entsprechend der so genannten Europa-Steuerung vorgesehen sein, wie sie in Erdbaumaschinen häufig verwendet wird.

Vom ersten und vom zweiten Sitz aus sind alle wesentlichen Fahr- und Arbeitsfunktionen der Baumaschine bedienbar, so dass die erste Person vom ersten Sitz aus normal arbeiten kann, sobald die erste Person aber einen Bedienfehler begeht, die zweite Person vom zweiten Sitz aus eingreifen und diesen korrigieren kann.

Erster und zweiter Sitz können sich in dem gleichen oder gegebenenfalls auch in getrennten Führerhäusern oder Fahrzeugkabinen befinden, wenn die Maschine über zwei solche verfügt. Die Kommunikation zwischen der ersten und der zweiten Person kann bei getrennten Fahrzeugkabinen über Mikrofone und Lautsprecher erfolgen.

Der zweite Sitz kann hinter dem ersten Sitz und dann gegebenenfalls etwas höher angeordnet sein. Der zweite Sitz kann sich aber auch neben oder vor dem ersten Sitz befinden. Es können auch alternativ zwei Sitze und/oder zwei Kabinen übereinander angeordnet sein, was beispielsweise bei größeren Baumaschinen wie z.B. Radladern sinnvoll ist.

Die Fahrzeugkabine kann gegenüber einer Standardmaschine verlängert, verbreitert oder höher ausgebildet sein, um die zwei Sitze mit den diesen zugeordneten Bedienungseinrichtungen aufzunehmen.

Es kann auch vorgesehen sein, dass die zweite Person über eine Fernsteuerung von außerhalb der Fahrzeugkabine in das Geschehen eingreift.

Als zusätzliche Sicherheit kann man beispielsweise einen Notschalter im Bereich des zweiten Sitzes vorsehen, so dass die zweite Person auch notfalls bei Gefahr eine völlige Abschaltung der Maschine vornehmen kann. Alternativ dazu oder zusätzlich kann auch ein Schalter vorgesehen sein, mittels dessen man die Bedieneinrichtungen des ersten Sitzes funktionslos schalten kann, so dass dann nur noch die zweite Person Bedienoperationen vornehmen kann.

Ein dritter Sitz kann vorhanden sein, um beispielsweise eine weitere Person aufzunehmen, die das Geschehen beobachtet, beispielsweise ein Betreuer oder eine Begleitperson für eine behinderte Person oder ein Elternteil bei Kindern.

Eine weitere Sicherheit kann man schaffen, indem man mindestens für den ersten Sitz einen Sicherheitsgut, insbesondere einen Dreipunktgurt vorsieht.

Die Optimierung der Einsicht der zweiten Person in den Arbeitsbereich der Baumaschine kann man bei Bedarf beispielsweise mit Hilfe von Spiegeln oder Kameras am Fahrzeug und/oder Monitoren in der Fahrzeugkabine weiter verbessern.

Über die ersten und die zweiten Bedienungseinrichtungen können die unterschiedlichsten Arbeits- und Fahrfunktionen der Baumaschine bedient werden, beispielsweise Antrieb von Rädern oder Ketten, Drehung des Führerhauses, Betätigung von Lastarmen oder Auslegern oder Hubvorrichtungen, Betätigung von hydraulischen Zylindern für Arme, Gelenke, Schaufeln, Frontschild usw.

Um das Arbeiten vom ersten Sitz aus für eine nicht geschulte Person zu vereinfachen, kann beispielsweise vorgesehen sein, dass die Bedienungseinrichtungen am ersten Sitz langsamer arbeiten und/oder mit Verzögerung ansprechen.

Eine bevorzugte Weiterbildung der Erfindung sieht vor, dass eine Umschalteinrichtung vorhanden ist, mittels derer man von einer Höherrangigkeit der zweiten Bedieneinrichtungen auf eine Höherrangigkeit der ersten Bedieneinrichtungen umschalten kann. Dies ermöglicht es, dass nun die Steuersignale maßgeblich sind, die von den Bedieneinrichtungen des ersten Sitzes ausgehen. Weiterhin schafft dies auch die Möglichkeit, dass die geschulte Person von dem ersten Sitz aus arbeitet und die Arbeitsweise der Maschine vorgibt und die Person am zweiten Sitz schaut nur zu und kontrolliert die Arbeitsweise. Auch ist es dann beispielsweise möglich, dass nur eine Person vom ersten Sitz aus im normalen Betrieb an der Maschine arbeitet.

Beispielsweise kann das erfindungsgemäße Nutzfahrzeug/die Baumaschine eine Raupe, ein Bagger, ein Kran, Betonmischer, Radlader, eine Laderampe, Planierraupe, ein Tieflader, Dumper, eine Walze ein Mobilkran oder Hochkran sein.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 eine schematisch vereinfachte Seitenansicht eines Baggers gemäß einer bespielhaften Variante der Erfindung;
Figur 2 eine schematisch vereinfachte Draufsicht des Baggers von Figur 1;
Figur 3 eine schematisch vereinfachte Seitenansicht eines Baggers gemäß einer alternativen Variante der Erfindung;
Figur 4 eine entsprechende Draufsicht auf den Bagger von Figur 3;
Figur 5 ein Diagramm anhand dessen die Steuerfunktionen des erfindungsgemäßen Baggers erläutert werden;
Figur 5.1 ein Diagramm anhand dessen die Steuerfunktionen gemäß einer alternativen Variante des erfindungsgemäßen Baggers erläutert werden;
Figur 6 eine schematische Ansicht beispielhafter erster oder zweiter Bedieneinrichtungen mit zwei Multifunktionsstellteilen im Sitzplatzbereich einer erfindungsgemäßen Baumaschine;
Figur 7 eine Schemazeichnung zur beispielhaften Erläuterung der Arbeitsweise einer erfindungsgemäßen Baumaschine.

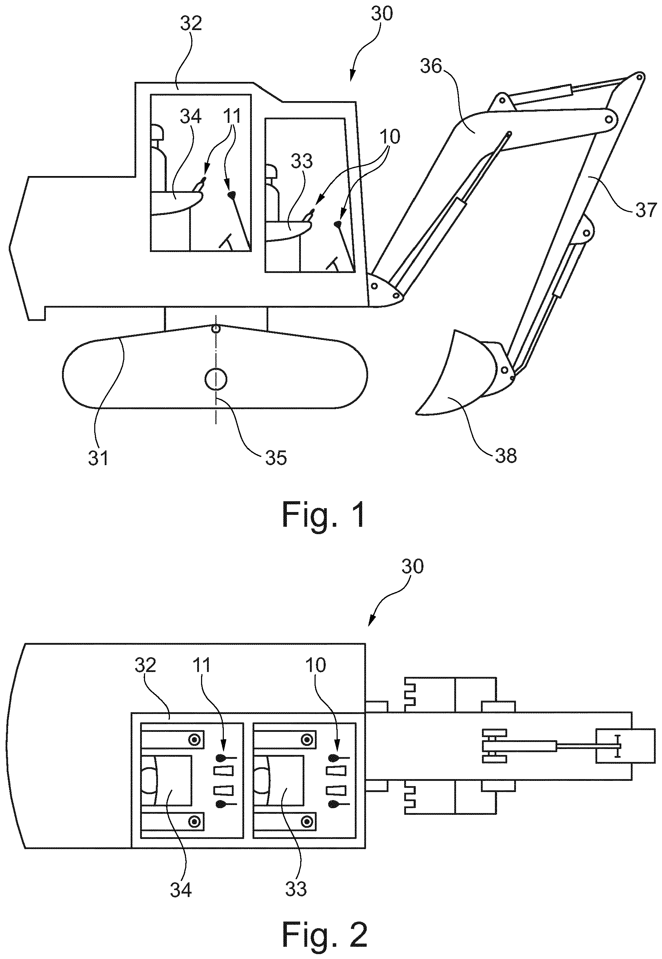

Nachfolgend wird unter Bezugnahme auf die Figuren 1 und 2 eine erste beispielhafte konstruktive Variante einer mit zwei Sitzen ausgerüsteten Baumaschine gemäß der Erfindung näher erläutert. Es handelt sich hier um einen Bagger 30 mit Kettenantrieb 31. Anders als bei einem herkömmlichen Bagger hat der erfindungsgemäße Bagger 30 eine Fahrzeugkabine 32 mit zwei hintereinander angeordneten Sitzen, nämlich einem ersten vorderen Sitz 33 und einem zweiten hinteren Sitz 34. Um diese Anordnung von zwei Sitzen 33, 34 zu ermöglichen, ist die Fahrzeugkabine 32 gegenüber einem herkömmlichen Bagger verlängert und der Schwerpunkt der Fahrzeugkabine ist beispielsweise durch Gewichte so verändert, dass er sich weitgehend in der Höhe der senkrechten Achse 35 befindet, um die die Fahrzeugkabine 32 schwenkt.

Der hintere Sitz 34 ist etwas höher angeordnet als der vordere Sitz 33, so dass der hintere Fahrer eine ausreichende Einsicht in das Arbeitsfeld des Baggers 30 hat. Beide Sitze 33, 34 sind mit sämtlichen Bedienungseinrichtungen 10, 11 ausgestattet, so dass man von jedem der beiden Sitze 33, 34 aus an alle Fahrfunktionen und Arbeitsfunktionen der Maschine bedienen kann. Die dem zweiten Sitz 34 zugeordneten zweiten Bedienungseinrichtungen 11 sind dabei den ersten Bedienungseinrichtungen 10 des ersten Sitzes 33 übergeordnet, so dass der Fahrer auf dem zweiten Sitz Fehlbedienungen des Fahrers auf dem ersten Sitz korrigieren kann.

Der in den Figuren 1 und 2 gezeigte Bagger 30 hat einen über einen hydraulische Kolben-Zylinder-Einheit schwenkbaren Hauptarm 36, einen mit diesem schwenkbar verbundenen Vorderarm 37 sowie eine Schaufel 38 am vorderen Ende des Vorderarms 37, die ebenfalls schwenkbar ist zur Ausübung der Baggerfunktion. Alle diese Funktionen ebenso wie das Drehen der Fahrzeugkabine 32 um ihre vertikale Achse 35 und der Antrieb der Kette 31 werden bei einem Bagger in der Regel über Joysticks, Hebel und Pedale bedient. Diese Bedienungseinrichtungen 10, 11 sind wie auch Figur 2 zeigt doppelt vorhanden und den beiden Sitzen 33, 34 zugeordnet.

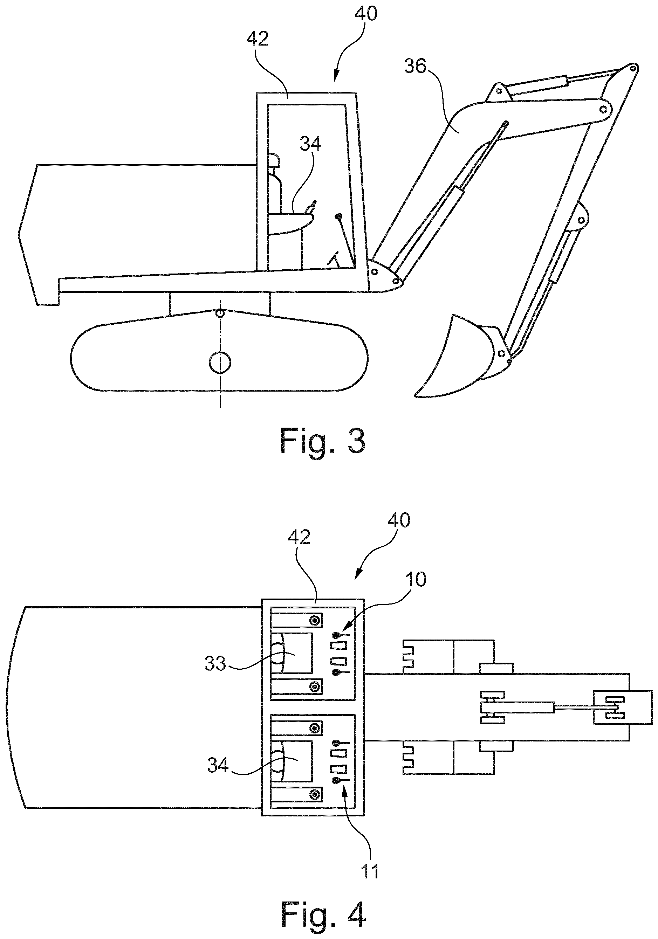

In dem Ausführungsbeispiel gemäß den Figuren 3 und 4 ist eine alternative Variante dargestellt, bei der der Bagger 40 eine Doppelkabine 42 aufweist mit zwei nebeneinander angeordneten Sitzen 33, 34. Die Fahrzeugkabine 42 kann daher hier etwas breiter ausgebildet sein als bei einem herkömmlichen Bagger. Im Übrigen kann der Bagger 40 hinsichtlich seines Arms 36 und der diversen Arbeitsfunktionen ebenso ausgebildet sein wie derjenige gemäß Figur 2. An beiden Sitzen 33, 34 sind auch hier die vollständigen Bedienungseinrichtungen 10, 11 vorhanden, so dass jeder der beiden Fahrer alle Fahr- und Arbeitsfunktionen der Maschine bedienen kann. Die Bedienungseinrichtungen 11 am zweiten Sitz 34 übersteuern wieder die entsprechenden Bedienungseinrichtungen 10 am ersten Sitz 33.

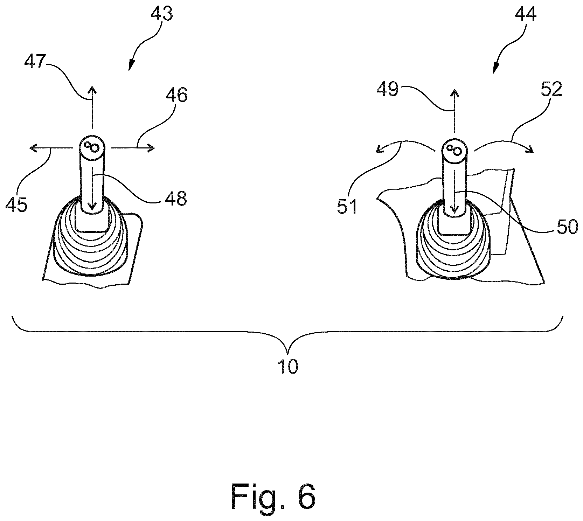

Nachfolgend werden unter Bezugnahme auf Figur 6 beispielhafte erste Bedienelemente 10 zur Betätigung der diversen Fahr- und Arbeitsfunktionen in einer erfindungsgemäßen Baumaschine erläutert. Die zweiten Bedienelemente 11 die dem zweiten Sitz für die zweite Person zugeordnet, können im Prinzip analog ausgebildet sein wie die ersten Bedienelemente 10 und werden daher hier nicht näher erläutert.

Die ersten Bedienelemente 10 umfassen zwei Multifunktionsstellteile 43, 44, die nachfolgend vereinfacht als "joysticks" bezeichnet werden. Der erste joystick 43 befindet sich links vom Fahrersitz (hier nicht eingezeichnet) und der zweite joystick 44 befindet sich rechts vom Fahrersitz, so dass der erste joystick 43 mit der linken Hand bedient und der zweite joystick 44 mit der rechten Hand bedient werden kann. Der erste joystick 43 kann in einer Kippbewegung gemäß dem Pfeil 45 nach links bewegt werden, um beispielsweise damit eine Drehung des Oberwagens der Baumaschine um seine Achse nach links zu bewirken. Entsprechend bewirkt ein Kippen des ersten joysticks 43 in Richtung des Pfeils 46 nach rechts eine Drehung des Oberwagens nach rechts. Mittels des Pfeils 47 kann die Bedienungsperson den ersten joystick 43 nach vorn bewegen und dadurch beispielsweise einen Stielzylinder der Baumaschine ausfahren. Mittels des Pfeils 48 kann der erste joystick 43 nach hinten gekippt werden, wodurch der Stielzylinder der Baumaschine eingefahren wird. Bei der Betätigung des ersten joysticks 43 sind somit mindestens vier verschiedene Bedienungsfunktionen möglich, wozu der joystick entsprechend gelenkig und kippbar bzw. verschiebbar gelagert ist. Diese Art der Steuerung ist bei Baumaschinen, insbesondere Erdbaumaschinen wie Baggern, Raupen oder dergleichen weit verbreitet.

Da erfindungsgemäß auch dem zweiten Sitzplatz mit den zweiten Bedienelementen, die in Figur 6 nicht dargestellt sind, entsprechende joysticks zugeordnet sind, muss die Steuerung der Maschine so ausgelegt sein, dass sich alle diese Bedienfunktionen der ersten Bedienelemente 10 von den zweiten Bedienelementen 11 jeweils übersteuern lassen. Bei einer solchen Baumaschine erfolgt in aller Regel die Betätigung der Arbeits- und Fahrfunktionen hydraulisch, so dass beispielsweise bei Bewegung des joysticks 43 in Richtung eines der Pfeile 45-48 in Figur 6 ein entsprechendes Ventil in einem System von Hydraulikleitungen geschlossen oder geöffnet wird, wobei im Falle einer Übersteuerung der jeweiligen Funktion durch die zweiten Bedienelemente deren Steuerbefehl der Vorrang gegeben und das Ventil entsprechend dem Steuerbefehl der zweiten Bedienelemente gesteuert wird, so dass in dem Moment der Übersteuerung der Steuerbefehl des ersten Bedienelements unwirksam ist.

Der mittels der rechten Hand zu bedienende zweite joystick 44 betätigt ebenfalls mindestens vier Funktionen der Baumaschine, beispielsweise wird bei Kippbewegung des joysticks 44 nach vorn entsprechend dem Pfeil 49 ein Ausleger der Baumaschine gesenkt und bei Kippbewegung des joysticks 44 nach hinten in Richtung des Pfeils 50 wird der gleiche Ausleger angehoben. Bewegt man den joystick 44 in Richtung des Pfeils 51 nach links, wird beispielsweise der Löffel eines Baggers angekippt und bei Bewegung des joysticks 44 in Richtung des Pfeils 52 nach rechts wird der gleiche Löffel des Baggers ausgekippt. Auch derartige Schwenkbewegungen von Armen, Auslegern, Schaufeln von Baumaschinen werden in der Regel hydraulisch bewirkt, so dass bei Betätigung des joysticks 44 über die Steuerung der Maschine entsprechende Hydraulikventile geöffnet oder geschlossen werden.

Da die ersten Bedienelemente 10 zwei joysticks 43, 44 umfassen, der Einzelfunktionen zuvor erläutert wurden, ist es möglich, diesen joysticks noch weitere Bedienfunktionen zuzuweisen, wenn beide joysticks gemeinsam bewegt werden. Beispielsweise kann man Funktionen zur Lenkung oder Fahrbewegung einer gleichzeitigen Betätigung beider joysticks zuordnen. Beispielsweise kann sich die Baumaschine vorwärts bewegen, wenn beide joysticks 43, 44 in Richtung der Pfeile 47, 49 nach vorn gedrückt werden oder wenn der eine joystick 43 nach vorn gedrückt wird und gleichzeitig der andere joystick 44 zurückgezogen wird, kann sich die Baumaschine, die über einen Kettenantrieb verfügt, auf der Stelle drehen. Bei der erfindungsgemäßen Ausbildung der Bedienelemente können auch diese Funktionen der Baumaschine von den zweiten Bedienelementen übersteuert werden.

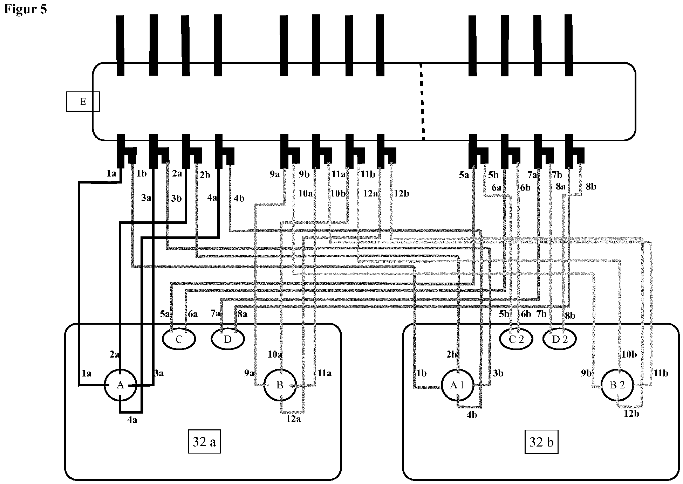

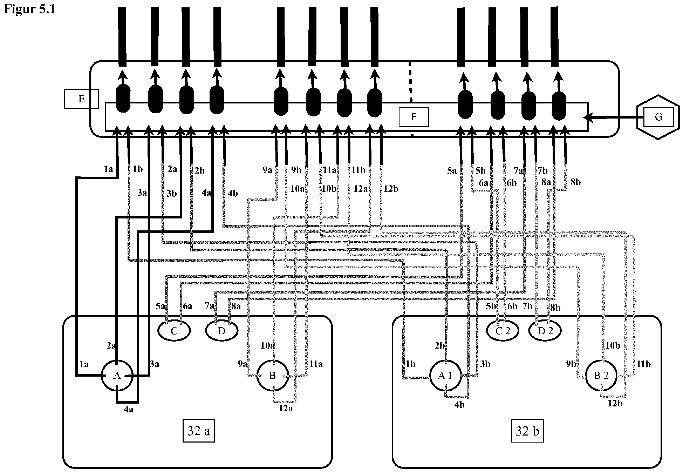

Nachfolgend werden unter Bezugnahme auf die schematische Darstellung von Figur 5 die diversen Steuerfunktionen einer beispielhaften erfindungsgemäßen Baggersteuerung näher erläutert. Die beiden unteren etwa rechteckigen Blöcke symbolisieren die beiden Kabinen 32 a und 32 b, über die ein erfindungsgemäßer Bagger verfügt, wobei in diesem Fall die Kabine 32 a in der Abbildung links die beherrschende Kabine ist und somit den zweiten Bedieneinrichtungen gemäß der Terminologie der vorliegenden Anmeldung entspricht und wobei die Kabine 32 b rechts die untergeordnete Kabine ist und somit den ersten Bedieneinrichtungen entspricht. In jeder der beiden Kabinen 32 a, 32 b befinden sich jeweils zwei joysticks, nämlich einmal die joysticks A und B in Kabine 32 a links und die joysticks A1 und B2 in Kabine 32 b rechts.

Von dem linken joystick A in der linken Kabine 32 a gehen vier Hydraulikleitungen 1 a, 2a, 3a, 4a jeweils zu diesen zugeordneten Hydraulikventilen an dem Steuerblock E, wobei diese Ventile beispielsweise für die Steuerung des Hauptbaggerarms und für die Drehung des Kranzes (Oberwagens) um seine Achse verwendet werden. Wir man aus Figur 5 weiterhin erkennen kann, gehen von der rechten Kabine 32 b, in der sich links der joystick A1 befindet ebenfalls vier Hydraulikleitungen 1 b, 2b, 3b, 4b aus, die für die Steuerung der gleichen Funktionen verantwortlich sind und infolgedessen zu den gleichen Hydraulikventilen des Steuerblocks führen. Bei diesen Hydraulikventilen kann es sich beispielsweise um solche handeln, die zwei Eingänge und nur einen Ausgang haben, welcher über Leitungen zu den entsprechenden Bauteilen der Maschine führt, um die gewünschten Arbeitsfunktionen zu bewirken. Man kann die Übersteuerung der Befehle von den Leitungen 1 a, 2a, 3a, 4a gegenüber denjenigen von den Leitungen 1 b, 2b, 3b, 4b steuertechnisch beispielsweise derart lösen, dass man den von der zweiten Kabine 32 b kommenden Hydraulikleitungen jeweils einen geringeren Druck zuweist und den von der ersten Kabine 32 a einen höheren Druck zuweist. Ergeht dann von der untergeordneten Kabine 32 b ein Steuerbefehl mit einem Druck von beispielsweise 50 bar und dieser Befehl soll übersteuert werden von der Person in der beherrschenden Kabine 32 a, dann wird dort bei der Betätigung des entsprechenden Bedienelements beispielsweise an dem entsprechenden Hydraulikventil an dem Steuerblock E ein Steuerbefehl mit beispielsweise 70 bar erzeugt, wodurch der erste Befehl übersteuert wird.

In der Kabine 32 a befindet sich ebenso wie in der Kabine 32 b jeweils ein zweiter joystick B bzw. B2, über den wiederum jeweils vier Bedienfunktionen der Maschine gesteuert werden. Der joystick B ist über die Hydraulikleitungen 9a, 10a, 11a, 12a, mit den entsprechenden Hydraulikventilen des Steuerblocks E verbunden, die auch hier wieder über jeweils zwei Eingänge verfügen, so dass dort auch die vier Hydraulikleitungen 9b, 10b, 11 b, 12b von dem zweiten joystick B2 der zweiten Kabine 32 b eingehen und die Befehle von der zweiten Kabine 32 b von denjenigen der ersten Kabine 32 a in der zuvor beschriebenen Weise übersteuert werden können. Über die Hydraulikleitungen 9b, 10b, 11 b, 12b können beispielsweise Arbeitsfunktionen eines Baggers wie das Anheben oder Senken eines Auslegers und das Öffnen oder Schließen einer Baggerschaufel gesteuert werden.

In beiden Kabinen 32 a und 32 b befinden sich weiterhin jeweils zwei Hebel C, D bzw. C2, D2 für die Kettensteuerung des Baggers. Jede der beiden Ketten kann man separat über jeweils einen dieser Hebel steuern, bewegt man beide Hebel gleichzeitig, führt dies zu einer Vorwärts- oder Rückwärtsfahrbewegung. Von der linken Kettensteuerung C gehen die beiden Hydraulikleitungen 5a und 6a zu dem Steuerblock E und von der rechten Kettensteuerung D gehen die beiden Hydraulikleitungen 7a und 8a zu dem Steuerblock E, wobei der für die Kettensteuerung zuständige Bereich in der Zeichnung der besseren Übersichtlichkeit halber separat im rechten Abschnitt des Steuerblocks E dargestellt ist. Ebenso führen die entsprechenden Hydraulikleitungen 5b, 6b, 7b, 8b von der Kettensteuerungen C2 und D2 der rechten Kabine 32 b zu diesem Bereich des Steuerblocks E, wobei auch hier die entsprechenden Hydraulikventile jeweils zwei Eingänge haben aber nur einen Ausgang, der zu den jeweiligen Maschinenteilen des Baggers führt, die zu betätigen sind. Auch bei den Kettensteuerungen ist ein Übersteuern der Bedienfunktionen C2 und D2 in der rechten Kabine 32 b durch die Betätigung der entsprechenden Bedienhebel C und D der Kettensteuerung in der linken Kabine 32 a möglich.

Figur 5.1 zeigt eine alternative Variante der zuvor beschriebenen Steuerung der Maschine, die im Prinzip sehr ähnlich aufgebaut ist wie die zuvor unter Bezugnahme auf Figur 5 beschriebene Variante. Allerdings werden hier im Eingangsbereich der Steuerung keine Hydraulikventile verwendet und die Leitungen von den Bedienelementen in den beiden Kabinen 32 a und 32 b zum Steuerblock E sind hier keine Hydraulikleitungen, sondern elektrische Leitungen, die lediglich Steuerbefehle übermitteln, da hier der Steuerblock E eine elektronische Vorsteuerung umfasst. Man kann beispielsweise für den Steuerblock E ein Bus-System verwenden und einen Mikroprozessor in geeigneter Weise programmieren, so dass die über die diversen Leitungen 1a - 12a von der ersten Kabine 32 a bzw. die Leitungen 1b - 12b von der zweiten Kabine 32 b in dem Steuerblock eingehenden Befehle elektronisch verarbeitet werden und von dem Steuerblock dann ausgangsseitig jeweils die anzusprechenden Hydraulikleitungen zu den jeweiligen Maschinenteilen entsprechend gesteuert werden.

In der Variante von Figur 5.1 umfasst der Steuerblock eine programmierbare Steuerungseinheit F für die Ventilsteuerung, so dass man nunmehr in einfacher Weise bei Bedarf eine Umschaltung der Vorrangigkeit der Bedienelemente der einen oder anderen Kabine vornehmen kann. Man kann somit nun auch vorsehen, dass die in der Zeichnung rechte zweite Kabine 32 b die beherrschende Kabine und die linke Kabine 32 a die untergeordnete Kabine ist, indem man beispielsweise über einen Schalter in einer der Kabinen eine entsprechende Umschaltung vornimmt, die dann in dem Steuerblock die Vorrangigkeit ändert.

Bei der Variante gemäß Figur 5.1 ist weiterhin ein Funkempfänger G für Signale einer Funkfernsteuerung vorgesehen, die optional vorhanden ist, so dass man über die Fernsteuerung auf den Steuerblock einwirken und von außerhalb der Maschine Befehle erzeugen kann, durch die gewünschte Bedienfunktionen der Maschine ausgeführt werden.

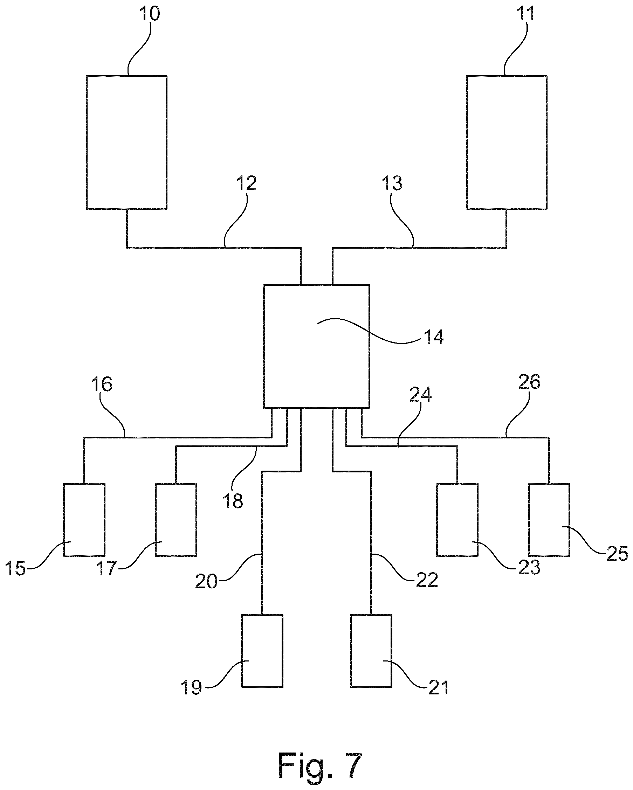

Nachfolgend wird noch einmal unter Bezugnahme auf die schematische Darstellung von Figur 7 das Funktionsprinzip einer erfindungsgemäßen Baumaschine erläutert. Die ersten Bedieneinrichtungen 10 sind einem ersten Sitz für eine erste Person zugeordnet, welche verschiedene Funktionen einer Baumaschine oder eines Nutzfahrzeugs bedient. In dem Beispiel handelt es sich um einen Bagger mit Kettenantrieb. Weiterhin sind zweite Bedienungseinrichtungen 11 einem zweiten Sitz für eine zweite Person in einem Führerhaus des Baggers zugeordnet, wobei die zweite Person alle Funktionen ausüben kann, die auch die erste Person über die Bedieneinrichtungen 10 ausübt. Die Steuersignale für die verschiedenen Funktionen gelangen von den ersten Bedieneinrichtungen 10 über die Steuerleitung 12 an die Steuereinheit 14, während die an den zweiten Bedieneinrichtungen 11 ausgeübten Funktionen Steuersignale über die Steuerleitung 13 an die Steuereinheit 14 senden. Von der Steuereinheit 14 gehen dann die Steuerleitungen zu den diversen Funktionsmodulen der Maschine aus. In dem Beispiel führt die Steuerleitung 16 zu dem Funktionsmodul 15, welches eine Drehung des Führerhauses um seine vertikale Achse veranlasst. Die Steuerleitung 18 führt zu dem Funktionsmodul 17, welches eine hydraulisch bewirkte Schwenkbewegung eines Baggerarms veranlasst.

Die Steuerleitung 20 führt zu dem Funktionsmodul 19, welches eine Schwenkbewegung eines zweiten Baggerarms veranlasst. Die Steuerleitung 22 führt zu dem Funktionsmodul 21, welches eine Schwenkbewegung einer Baggerschaufel gegenüber dem Arm, an der diese befestigt ist, bewirkt.

Die Steuerleitung 24 führt beispielsweise zu einem Funktionsmodul 23, welches die Geschwindigkeit einer Vorschubbewegung des Fahrzeugs regelt.

Die Steuerleitung 26 führt zu dem Funktionsmodul 25, welches auf einen Kettenantrieb des Fahrzeugs einwirkt, so dass das Fahrzeug vorwärts bzw. rückwärts fährt.

Von den ersten Bedienungseinrichtungen 10 können somit über die zentrale Steuereinheit 14 alle Funktionsmodule 15, 17, 19, 21, 23, 25 der Maschine erreicht werden. In der Steuereinheit ist eine hierarchische Rangordnung, die dazu führt, dass bei gleichzeitiger Ansprache eines der genannten Funktionsmodule über die zweiten Bedienungseinrichtungen 11 und die Steuerleitung 13 dieses Signal ein anderes Signal für das jeweilige Funktionsmodul, welches von den ersten Bedienungseinrichtungen kommt, übersteuert, so dass der von der ersten Bedienungseinrichtung 10 kommende Befehl nicht mehr ausgeführt wird, sondern stattdessen der Befehl von der zweiten Bedienungseinrichtung 11 ausgeführt wird.

### Bezugszeichenliste

- 1a bis 12a: Hydraulikleitungen/elektrische Leitungen
- 1b bis 12b: Hydraulikleitungen/elektrische Leitungen
- A: erster joystick
- A1: erster joystick (rechts)
- B: zweiter joystick
- B2: zweiter joystick (rechts)
- C: Kettensteuerung
- C2: Kettensteuerung (rechts)
- D: Kettensteuerung
- D2: Kettensteuerung (rechts)
- E: Steuerblock
- F: programmierbare Steuerungseinheit
- G: Funkempfänger für Fernsteuerung

- 10: erste Bedieneinrichtungen
- 11: zweite Bedieneinrichtungen
- 12: Steuerleitung
- 13: Steuerleitung
- 14: Steuereinheit
- 15: Funktionsmodul
- 16: Steuerleitung
- 17: Funktionsmodul
- 18: Steuerleitung
- 19: Funktionsmodul
- 20: Steuerleitung
- 21: Funktionsmodul
- 22: Steuerleitung
- 23: Funktionsmodul
- 24: Steuerleitung
- 25: Funktionsmodul
- 26: Steuerleitung
- 30: Bagger
- 31: Kettenantrieb
- 32: Fahrzeugkabine
- 32 a: linke Kabine
- 32 b: rechte Kabine
- 33: vorderer Sitz
- 34: hinterer Sitz
- 35: Achse
- 36: Hauptarm
- 37: Vorderarm
- 38: Schaufel
- 40: Bagger
- 42: Doppelkabine
- 43: erstes Multifunktionsstellteil (joystick)
- 44: zweites Multifunktionsstellteil (joystick)
- 45: Pfeil
- 46: Pfeil
- 47: Pfeil
- 48: Pfeil
- 49: Pfeil
- 50: Pfeil
- 51: Pfeil
- 52: Pfeil

## Patentansprüche

1. Baumaschine oder Nutzfahrzeug mit mindestens einer Fahrzeugkabine (32) oder mindestens einem Führerhaus mit einem ersten Sitz (33) mit ersten Bedieneinrichtungen (10) für eine erste Bedienungsperson, von dem aus alle wesentlichen Fahr- und/oder Arbeitsfunktionen des Nutzfahrzeugs/der Baumaschine bedienbar sind, wobei in der Fahrzeugkabine/dem Führerhaus wenigstens ein zweiter Sitz (34) mit zweiten Bedieneinrichtungen (11) für eine zweite Bedienungsperson vorgesehen ist, von dem aus ebenfalls alle wesentlichen Fahr- und/oder Arbeitsfunktionen des Nutzfahrzeugs/der Baumaschine bedienbar sind, einschließlich einer Lenkfunktion für das Fahrzeug, wobei Steuerelemente vorgesehen sind, mittels derer bei gleichzeitiger Betätigung der ersten und der zweiten Bedieneinrichtungen den zweiten Bedieneinrichtungen (11) ein höherer Rang zugewiesen wird, so dass die zweiten Bedieneinrichtungen die ersten Bedieneinrichtungen (10) übersteuern und wobei die ersten Bedieneinrichtungen (10) und die zweiten Bedieneinrichtungen (11) jeweils wenigstens ein von Hand bedienbares Multifunktionsstellteil (43, 44) umfassen,
**dadurch gekennzeichnet, dass** die Fahrzeugkabine (32) oder das Führerhaus gegenüber einem Normfahrzeug verlängert, verbreitert oder höher ausgebildet ist und dass über Gewichte der Schwerpunkt des Fahrzeugs/der Baumaschine so austariert ist, dass dieser bei verlängerter oder verbreiterter Fahrzeugkabine (32)/verlängertem oder verbreitertem Führerhaus etwa mittig im Bereich einer zentralen Drehachse der Fahrzeugkabine/des Führerhauses liegt oder der Schwerpunkt anderweitig entsprechend der Arbeitsweise der Baumaschine/des Nutzfahrzeugs optimiert ist.

2. Baumaschine oder Nutzfahrzeug nach Anspruch 1, **dadurch gekennzeichnet, dass** die ersten Bedieneinrichtungen (10) und die zweiten Bedieneinrichtungen (11) jeweils wenigstens zwei von Hand bedienbare Multifunktionsstellteile (43, 44) umfassen.

3. Baumaschine oder Nutzfahrzeug nach Anspruch 1 oder 2, **dadurch gekennzeichnet, dass** ein Multifunktionsstellteil (43, 44) jeweils mindestens vier verschiedene Bedienfunktionen ausübt durch Kippbewegung oder Verschiebebewegung nach vorn, Kippbewegung oder Verschiebebewegung nach hinten, Kippbewegung oder Verschiebebewegung seitlich nach rechts und Kippbewegung oder Verschiebebewegung seitlich nach links.

4. Baumaschine oder Nutzfahrzeug nach Anspruch 2 oder 3, **dadurch gekennzeichnet, dass** mindestens eine weitere Bedienfunktion der Baumaschine oder des Nutzfahrzeugs ausgeübt wird durch gleichzeitiges Betätigen zweier Multifunktionsstellteile (43, 44) der ersten Bedieneinrichtungen (10) oder der zweiten Bedieneinrichtungen (11).

5. Baumaschine oder Nutzfahrzeug nach einem der Ansprüche 1 bis 4, **dadurch gekennzeichnet, dass** der zweite Sitz (34) hinter oder vor dem ersten Sitz (33) oder neben dem ersten Sitz (33), oder oberhalb oder unterhalb des ersten Sitzes angeordnet ist.

6. Baumaschine oder Nutzfahrzeug nach einem der Ansprüche 1 bis 5, **dadurch gekennzeichnet, dass** eine Umschalteinrichtung vorgesehen ist, mittels derer man von einer Höherrangkeit der zweiten Bedieneinrichtungen (11) auf eine Höherrangigkeit der ersten Bedieneinrichtungen (11) umschalten kann.

7. Baumaschine oder Nutzfahrzeug nach einem der Ansprüche 1 bis 6, **dadurch gekennzeichnet, dass** Einrichtungen (G) vorgesehen sind, mittels derer man eine Fernsteuerung einzelner oder mehrerer der zweiten Bedieneinrichtungen (11) von außerhalb der Fahrzeugkabine (32)/des Führerhauses vornehmen kann.

8. Baumaschine oder Nutzfahrzeug nach einem der Ansprüche 1 bis 7, **dadurch gekennzeichnet, dass** wenigstens ein Notschalter im Bereich der zweiten Bedieneinrichtungen vorgesehen ist, mittels dessen der Motor der Baumaschine/des Nutzfahrzeugs ausschaltbar ist oder mindestens die Bedieneinrichtungen des ersten Sitzes funktionslos schaltbar sind.

9. Baumaschine oder Nutzfahrzeug nach einem der Ansprüche 1 bis 8, **dadurch gekennzeichnet, dass** in der Fahrzeugkabine (32)/im Führerhaus wenigstens ein dritter Sitz für eine Begleitperson vorgesehen ist.

10. Baumaschine oder Nutzfahrzeug nach einem der Ansprüche 1 bis 9, **dadurch gekennzeichnet, dass** das Nutzfahrzeug/die Baumaschine eine Raupe, ein Bagger (30), ein Kran, Betonmischer, Radlader, eine Laderampe, Planierraupe, ein Tieflader, Dumper, eine Walze, ein Mobilkran oder Hochkran ist.

11. Baumaschine oder Nutzfahrzeug nach einem der Ansprüche 1 bis 10, **dadurch gekennzeichnet, dass** wenigstens eine der Bedieneinrichtungen (10, 11) für die Betätigung einer Rückwärtsfahrt, einer Vorwärtsfahrt, einer Lenkfunktion, eines Kettenvorschubs, einer Drehung der Fahrzeugkabine/des Führerhauses um eine vertikale Achse, einer Betätigung eines Lastarms, eines Auslegers, einer Hubfunktion, einer gelenkigen Bewegung eines Lastarms, eines Gelenks einer Schaufel, eines Frontschildes oder dergleichen vorgesehen ist.

12. Baumaschine oder Nutzfahrzeug nach einem der Ansprüche 1 bis 11, **dadurch gekennzeichnet, dass** eine Einrichtung vorgesehen ist, die ein verzögertes Ansprechen und/oder eine verlangsamte Bewegung der jeweiligen Fahr- oder Arbeitsfunktion bei deren Veranlassung durch Betätigung einer der ersten Bedieneinrichtungen (10) bewirkt.

13. Baumaschine oder Nutzfahrzeug nach einem der Ansprüche 1 bis 12, **dadurch gekennzeichnet, dass** von den zweiten Bedieneinrichtungen (A, B, C, D) sowie von den ersten Bedieneinrichtungen (A1, B2, C2, D2) jeweils Hydraulikleitungen zu jeweils Hydraulikventilen gehen, die den jeweiligen Bedienfunktionen zugeordnet sind, wobei die Hydraulikventile jeweils zwei Eingänge aufweisen sowie einen Ausgang zu einem Steuerblock (E), von dem aus die einzelnen Hydraulikleitungen zu den jeweils anzusteuernden Maschinenteilen der Baumaschine ausgehen.

14. Baumaschine oder Nutzfahrzeug nach einem der Ansprüche 1 bis 12, **dadurch gekennzeichnet, dass** von den zweiten Bedieneinrichtungen (A, B, C, D) sowie von den ersten Bedieneinrichtungen (A1, B2, C2, D2) jeweils elektrische Leitungen zu einem Steuerblock (E) mit einer elektronischen Vorsteuerung gehen, die den jeweiligen Bedienfunktionen zugeordnet sind, wobei die Steuerung für jede Bedienfunktion jeweils zwei Eingänge aufweist sowie jeweils einen Ausgang im Bereich des Steuerblocks (E), von dem aus die einzelnen Hydraulikleitungen zu den jeweils anzusteuernden Maschinenteilen der Baumaschine ausgehen.

15. Baumaschine oder Nutzfahrzeug nach Anspruch 13, **dadurch gekennzeichnet, dass** eine Steuerungseinheit (F) für die Ventilsteuerung im Bereich des Steuerblocks (E) programmierbar ist und über einen Schalter der Baumaschine/des Nutzfahrzeugs eine Umschaltung vornehmbar ist, die die jeweilige Vorrangigkeit der zweiten Bedieneinrichtungen (A, B, C, D) in eine Vorrangigkeit der ersten Bedieneinrichtungen (A1, B2, C2, D2) ändert oder umgekehrt.

## Claims

1. A construction machine or commercial vehicle with at least one vehicle cabin (32) or at least one driver's cab with a first seat (33) with first operator controls (10) for a first operator, from where all essential driving and/or operating functions of the commercial vehicle/the construction machine can be carried out, wherein provision is made in the vehicle cabin / the driver's cab for at least one second seat (34) with second operator controls (11) for a second operator, from where all essential driving and/or operating functions of the commercial vehicle/the construction machine can be carried out, including a steering function for the vehicle, wherein control elements are provided by means of which, if the first and second operator controls are operated simultaneously, the second operator controls (11) are assigned a higher ranking, so that the second operator controls override the first operator controls (10), and wherein the first operator controls (10) and the second operator controls (11) each comprise at least one manually operated multifunction control device (43, 44),
**characterised in that** the vehicle cabin (32) or the driver's cab is configured longer, wider or higher compared to a standard vehicle, and **in that** the centre of gravity of the vehicle/the construction machine is balanced by means of weights such that the centre of gravity, for an elongated or widened vehicle cabin (32) / an elongated or widened driver's cabin, lies approximately in the centre of the area of a central rotary axis of the vehicle cabin / the driver's cab or is optimised otherwise to match the operation of the construction machine / the commercial vehicle.

2. The construction machine or commercial vehicle according to claim 1, **characterised in that** the first operator controls (10) and the second operator controls (11) each comprise at least two manually operated multifunction control devices (43, 44).

3. The construction machine or commercial vehicle according to claim 1 or 2, **characterised in that** a multifunction control device (43, 44) respectively controls at least four different operating functions, i.e. a forward-directed tilting movement or shifting movement, a rearward-directed tilting movement of shifting movement, a lateral tilting movement or shifting movement towards the right and a lateral tilting movement or shifting movement towards the left.

4. The construction machine or commercial vehicle according to claim 2 or 3, **characterised in that** at least one further operating function of the construction machine or the commercial vehicle is carried out by simultaneously operating two multifunction control devices (43, 44) of the first operator controls (10) or the second operator controls (11).

5. The construction machine or commercial vehicle according to one of claims 1 to 4, **characterised in that** the second seat (34) is arranged behind of or in front of, the first seat (33) or next to the first seat (33) or above or below the first seat.

6. The construction machine or commercial vehicle according to one of claims 1 to 5, **characterised in that** a changeover device is provided, by means of which it is possible to switch from a higher ranking of the second operator controls (11) to a higher ranking of the first operator controls (10).

7. The construction machine or commercial vehicle according to one of claims 1 to 6, **characterised in that** devices (G) are provided, by means of which it is possible to exercise remote control over individual or several of the second operator controls (11) from outside the vehicle cabin (32) / the driver's cab.

8. The construction machine or commercial vehicle according to one of claims 1 to 7, **characterised in that** at least one emergency switch is provided in the area of the second operator controls (11), by means of which the engine of the construction machine / the commercial vehicle can be switched off or at least the operator controls of the first seat can be disabled.

9. The construction machine or commercial vehicle according to one of claims 1 to 8, **characterised in that** provision is made in the vehicle cabin (32) / the driver's cab for at least one third seat for an accompanying person.

10. The construction machine or commercial vehicle according to one of claims 1 to 9, **characterised in that** the commercial vehicle / the construction machine is a caterpillar, digger (30), crane, concrete mixer, wheel loader, tracked loader, bulldozer, low-loader, dumper, roller, mobile crane or high-level crane.

11. The construction machine or commercial vehicle according to one of claims 1 to 10, **characterised in that** at least one of the operator controls (10, 11) is provided for activating a reversing function, a forward-drive function, a steering function, a chain feed, a rotation of the vehicle cabin / the driver's cab about a vertical axis, an activation of a load arm, a cantilever, a lifting function, an articulated movement of a load arm, bucket joint, front shield or the like.

12. The construction machine or commercial vehicle according to one of claims 1 to 11, **characterised in that** a control is provided, which causes a delayed response and/or a slowing-down of a movement of the respective driving or operating function when initiated by activating one of the first operator controls (10).

13. The construction machine or commercial vehicle according to one of claims 1 to 12, **characterised in that** hydraulic lines respectively lead from the second operator controls (A, B, C, D) and the first operator controls (A1, B2, C2, D2) to respective hydraulic valves, which are assigned to the respective operating functions, wherein the hydraulic valves respectively comprise two inputs as well as one output to a control block (E), from which the individual hydraulic lines lead to the respective machine parts of the construction machine, which have to be activated.

14. The construction machine or commercial vehicle according to one of claims 1 to 12, **characterised in that** electrical lines respectively lead from the second operator controls (A, B, C, D) and from the first operator controls (A1, B2, C2, D2) to a control block (E) with an electronic pilot control, the electrical lines being assigned to the respective operating functions, wherein the control for each operating function comprises two inputs each as well as one output in the area of the control block (E), from where the individual hydraulic lines lead to the respective machine parts of the construction machine to be activated.

15. The construction machine or commercial vehicle according to claim 13, **characterised in that** a control unit (F) for valve control in the area of the control block (E) is programmable, and a changeover can be performed by means of a switch of the construction machine / the commercial vehicle, which changes the respective superiority of the second operator controls (A, B, C, D) over to a superiority of the first operator controls (A1, B2, C2, D2) and vice versa.

## Revendications

1. Engin de chantier ou véhicule utilitaire avec au moins une cabine de véhicule (32) ou au moins un habitacle de conducteur avec un premier siège (33) avec des premiers systèmes de commande (10) pour un premier opérateur, à partir duquel toutes les fonctions de conduite et/ou de travail essentielles du véhicule utilitaire/de l'engin de chantier peuvent être commandées, un deuxième siège (34) avec des deuxièmes systèmes de commande (11) pour un deuxième opérateur étant prévu dans la cabine du véhicule/de l'habitacle du conducteur, depuis lequel également toutes les fonctions de conduite et/ou de travail essentielles du véhicule utilitaire/de l'engin de chantier peuvent être commandées, y compris une fonction de direction pour le véhicule, des éléments de commande étant prévus au moyen desquels en actionnant simultanément les premiers et les deuxièmes systèmes de commande un rang plus élevé est attribué aux deuxièmes systèmes de commande (11) de telle sorte que les deuxièmes systèmes de commande prennent le pas sur les premiers systèmes de commande (10) et les premiers systèmes de commande (10) et les deux deuxièmes systèmes de commande (11) comprenant respectivement au moins un organe de commande multifonctionnel (43, 44) pouvant être commandé à la main
**caractérisé en ce que** la cabine de véhicule (32) ou l'habitacle de conducteur est constitué allongé, élargi ou plus élevé par rapport à un véhicule normal et **en ce que** concernant les poids le centre de gravité du véhicule et/ou de l'engin de chantier est équilibré de telle manière que celui-ci se situe à peu près au centre dans la zone d'un axe de rotation central de la cabine de véhicule/de l'habitacle de conducteur pour une cabine de véhicule (32)/allongée ou élargie/ un habitacle de conducteur allongé ou élargi ou le centre de gravité est optimisé autrement selon le mode de travail de l'engin de chantier/du véhicule utilitaire.

2. Engin de chantier ou véhicule utilitaire selon la revendication 1, **caractérisé en ce que** les premiers systèmes de commande (10) et les deuxièmes systèmes de commande (11) comprennent respectivement au moins deux organes de commande multifonctionnels (43, 44) pouvant être actionnés à la main.

3. Engin de chantier ou véhicule utilitaire selon la revendication 1 ou 2, **caractérisé en ce qu'**un organe de commande multifonctionnel (43, 44) exerce respectivement au moins quatre fonctions de commande par un mouvement de bascule ou un mouvement de déplacement vers l'avant, un mouvement de bascule ou un mouvement de déplacement vers l'arrière, un mouvement de bascule ou un mouvement de déplacement latéralement vers la droite et un mouvement de bascule ou un mouvement de déplacement latéralement vers la gauche.

4. Engin de chantier ou véhicule utilitaire selon la revendication 2 ou 3, **caractérisé en ce qu'**au moins une autre fonction de commande de l'engin de chantier ou du véhicule utilitaire est exercée en actionnant simultanément les deux organes de commande multifonctionnels (43, 44) des premiers systèmes de commande (10) ou des deuxièmes systèmes de commande (11).

5. Engin de chantier ou véhicule utilitaire selon l'une quelconque des revendications 1 à 4, **caractérisé en ce que** le deuxième siège (34) est disposé derrière ou devant le premier siège (33) ou à côté du premier siège (33) ou au-dessus ou en dessous du premier siège.

6. Engin de chantier ou véhicule utilitaire selon l'une quelconque des revendications 1 à 5, **caractérisé en ce qu'**un dispositif d'inversion de commutation est prévu au moyen duquel on peut inverser en passant d'une primauté de rang des deuxièmes systèmes de commande (11) à une primauté de rang des premiers systèmes de commande (11).

7. Engin de chantier ou véhicule utilitaire selon l'une quelconque des revendications 1 à 6, **caractérisé en ce que** des systèmes (G) sont prévus au moyen desquels on peut procéder à une télécommande d'un ou de plusieurs des deuxièmes systèmes de commande (11) depuis l'extérieur de la cabine de véhicule (32)/de l'habitacle de conducteur.

8. Engin de chantier ou véhicule utilitaire selon l'une quelconque des revendications 1 à 7, **caractérisé en ce qu'**au moins un commutateur d'urgence est prévu dans la zone des deuxièmes systèmes de commande, au moyen duquel le moteur de l'engin de chantier/du véhicule utilitaire peut être déconnecté ou au moins les systèmes de commande du premier siège peuvent être connectés sans fonction.

9. Engin de chantier ou véhicule utilitaire selon l'une quelconque des revendications 1 à 8, **caractérisé en ce qu'**au moins un troisième siège est prévu dans la cabine de véhicule (32)/l'habitacle de conducteur pour une personne d'accompagnement.

10. Engin de chantier ou véhicule utilitaire selon l'une quelconque des revendications 1 à 9, **caractérisé en ce que** le véhicule utilitaire/l'engin de chantier est un engin à chenilles, un excavateur (30), une grue, une bétonneuse, un chargeur sur roues, un chargeur à chenilles, un bouteur niveleur, un véhicule de transport surbaissé, un tombereau automoteur, un rouleau compresseur, une grue mobile ou une grue télescopique.

11. Engin de chantier ou véhicule utilitaire selon l'une quelconque des revendications 1 à 10, **caractérisé en ce qu'**au moins un des systèmes de commande (10,11) est prévu pour la commande d'une conduite de recul, d'une conduite en avant, d'une fonction de direction, d'une avance de chaîne, d'une rotation de la cabine de véhicule/de l'habitacle de conducteur autour d'un axe vertical, d'un bras de charge autour d'un axe vertical, d'une commande d'un bras de charge, d'une flèche, d'une fonction de levage, d'un mouvement articulé d'un bras de charge, d'une articulation d'une pelle, d'un panneau avant ou d'un élément analogue.

12. Engin de chantier ou véhicule utilitaire selon l'une quelconque des revendications 1 à 11, **caractérisé en ce qu'**un système est prévu, qui actionne un déclenchement retardé et/ou un mouvement prolongé de la fonction respective de conduite ou de travail lors de la sollicitation de celui-ci par actionnement d'un des premiers systèmes de commande (10).

13. Engin de chantier ou véhicule utilitaire selon l'une quelconque des revendications 1 à 12, **caractérisé en ce que** des conduits hydrauliques partent respectivement des deuxièmes systèmes de commande (A, B, C, D) ainsi que des premiers systèmes de commande (A1, B2, C2, D2) vers les soupapes hydrauliques respectives, qui sont affectées aux fonctions de commande respectives, les soupapes hydrauliques comportant respectivement deux entrées ainsi qu'une sortie vers un bloc de commande (E) d'où partent les conduites hydrauliques individuelles vers les parties de machine à commander respectivement de l'engin de chantier.

14. Engin de chantier ou véhicule utilitaire selon l'une quelconque des revendications 1 à 12, **caractérisé en ce que** des conduits électriques partent respectivement des deuxièmes systèmes de commande (A, B, C, D) ainsi que des premiers systèmes de commande (A1, B2, C2, D2) vers un bloc de commande (E) avec une commande pilote électronique, qui sont affectés aux fonctions de commande respectives, la commande pour chaque fonction de commande comportant respectivement deux entrées ainsi respectivement qu'une sortie dans la zone dans la zone du bloc de commande (E) d'où partent les conduites hydrauliques individuelles vers les parties de machine à commander respectivement de l'engin de chantier.

15. Engin de chantier ou véhicule utilitaire selon la revendication 13, **caractérisé en ce qu'**une unité de commande (F) pour la commande de soupape peut être programmée dans la zone du bloc de commande (E) et une inversion de commutation peut être effectuée par un commutateur de l'engin de chantier/du véhicule utilitaire, qui modifie ou inverse la primauté respective des deuxièmes systèmes de commande (A, B, C, D) en une primauté des premiers systèmes de commande (A1, B2, C2, D2).
